**Europäisches Patentamt**

**European Patent Office**

**Office européen des brevets**

(19)

(11) Numéro de publication: **0 108 014**
**B1**

(12)

# FASCICULE DE BREVET EUROPEEN

(45) Date de publication du fascicule du brevet:
24.05.89

(51) Int. Cl.⁴: **F 02 B 23/10, F 02 B 1/02**

(21) Numéro de dépôt: 83402054.7

(22) Date de dépôt: 21.10.83

(54) Moteur à combustion interne utilisable avec un carburant à haute chaleur de vaporisation.

(30) Priorité: 22.10.82 FR 8217719

(43) Date de publication de la demande:
09.05.84 Bulletin 84/19

(45) Mention de la délivrance du brevet:
24.05.89 Bulletin 89/21

(84) Etats contractants désignés:
DE GB IT

(56) Documents cités:
DE-A- 1 576 005
FR-A- 811 000
FR-A- 2 343 893
FR-A- 2 456 840
GB-A- 522 313
US-A- 3 908 624

M.T.Z. MOTORTECHNISCHE ZEITSCHRIFT, vol. 42, no. 12, décembre 1981, Schwäbisch-Gmünd (DE), A. Neitz et al.: "Die Eignung von M.A.N.-FM-Dieselmotoren für den Betrieb mit reinen Alkoholkraftstoffen", pages 495-499
CH.H. FISHER:"CARBURATION", vol. II, Spark-Ignition Engines: Fuel Injection Development, 1966, Chapman & Hall, Londres (GB), pages 60-67
CH.H. FISHER:"CARBURATION", vol. III, Spark-Ignition

(73) Titulaire: CHENESSEAU, Société Anonyme, 19, Avenue de la Libération, F-45000 Orléans (FR)

(72) Inventeur: Agache, Georges, 8, Quai Madeleine, F-45000 Orleans (FR)

(74) Mandataire: Fort, Jacques et al, CABINET PLASSERAUD 84, rue d'Amsterdam, F-75009 Paris (FR)

(56) Documents cités: (suite)
Engines: Fuel Injection Systems, 1966, Chapman & Hall, Londres (GB), pages 70-72
Institut Français du Pétrole, Tome 1, 1966-1976, R. Brun: "Science et technique du moteur diesel industriel et de transport", Société des Editions Technip, Paris (FR)

**Description**

La présente invention a pour objet un moteur à combustion interne destiné à utiliser un carburant à chaleur de vaporisation élevée soit naturellement (cas des alcools par exemple), soit par suite d'une hydratation. Elle trouve une application particulièrement importante dans la réalisation de moteurs, notamment industriels et agricoles, utilisant des carburants constitués au moins essentiellement par des produits non pétroliers.

A l'heure actuelle, la quasi-totalité des moteurs à combustion interne mettent en œuvre soit le cycle Beau de Rochas à allumage commandé, soit le cycle Diesel à auto-inflammation (allumage par compression). Aucun de ces moteurs ne se prête correctement à l'utilisation des carburants de remplacement envisagés à l'heure actuelle et, en premier lieu, des alcools. L'utilisation d'alcool comme carburant dans un moteur mettant en œuvre le cycle de Beau de Rochas se traduit, même dans le cas d'un moteur à injection directe dans les cylindres, par un rendement insuffisant et un fonctionnement aléatoire, notamment lors des démarrages à froid. L'utilisation de ce même carburant dans des moteurs Diesel classiques, dont le rapport de compression volumétrique varie notamment avec la cylindrée unitaire de 16 à 23 et dans lesquels l'injection s'effectue en fin de compression, conduit également à des résultats peu satisfaisants ou à une impossibilité étant donné la carence en cétane.

Le brevet FR 2 343 893 décrit et revendique un moteur utilisant un carburant non pétrolier à injection de carburant dans le cylindre ou chaque cylindre, ayant un rapport de compression volumétrique avantageusement compris entre 15 et 18, dont le dispositif de réglage d'avance à l'injection est tel que cette injection soit élevée, au moins au démarrage. L'utilisation d'une avance élevée, d'au moins 140°, pouvant atteindre une valeur de l'ordre de 180° lors du démarrage à froid et une valeur nettement plus importante en fonctionnement normal, permet à la vaporisation de s'effectuer au cours de la phase de compression grâce à un réchauffement par mélange intime avec l'air admis dans le cylindre. Il est indispensable de noter au passage que le cycle ainsi réalisé est totalement différent de celui du moteur Diesel. Il se produit en effet un véritable effet de carburation au cours de la phase de compression, avec mélange intime et vaporisation complète du carburant dans l'air sous pression et à température élevée, pendant la phase de compression non adiabatique, avant allumage. Au contraire, dans le cas du moteur Diesel, l'injection directe s'effectue avec combustion immédiate du carburant pulvérisé dans l'air à haute température, avec une très faible avance.

La présente invention vise notamment à fournir un moteur dans lequel la combustion de carburant à haute chaleur de vaporisation s'effectue dans des conditions satisfaisantes et avec un rendement thermique global élevé, le démarrage à froid restant aisé et le moteur pouvant avoir une constitution générale qui est celle d'un moteur Diesel classique.

Dans ce but, l'invention propose un moteur à combustion interne à injection directe et à allumage commandé, conforme à la revendication 1.

L'injecteur porté par la culasse est avantageusement à plusieurs rangées de trous, typiquement à une dizaine de trous, de façon que le jet de carburant qu'il fournit soit très réparti. Cette disposition est à comparer à celle d'un moteur Diesel, dont l'injecteur fournit généralement un jet en nappe. La cuvette ménagée dans la calotte du piston aura généralement une forme approximativement cylindrique et décentrée par rapport au piston. Si l'on désigne par $D_0$, $D_1$ et H le diamètre du piston, celui de la cuvette et la profondeur maximum de la cuvette, on aura généralement intérêt à se tenir dans les plages suivantes:

$$0,60 \leqslant D_1/D_0 \leqslant 0,75$$
$$0,15 \leqslant H/D_0 \leqslant 0,20$$

Dans ces conditions, l'écoulement tourbillonnaire de l'air admis provoque une turbulence qui se concentre, lorsque le piston se rapproche du point mort haut, dans la cuvette, où se produit une stratification partielle. La bougie étant placée au droit de la zone de richesse maximum, il y a combustion rapide dans une chambre de petit diamètre, qui autorise à son tour une faible avance, d'où une réduction des pertes thermiques et un rapport de détente élevé. La rampe a un développement angulaire qui peut par exemple être de l'ordre de 180°, est en pente dans le sens de circulation des gaz dans la cuvette, et terminée par un flanc abrupt situé à proximité de la bougie d'allumage qui retient les dernières particules liquides. Une telle rampe étant difficile à usiner lorsqu'elle est continue, une réalisation plus simple à usiner, consiste à utiliser des gradins.

L'invention propose par ailleurs des moyens simples pouvant être utilisés pour éviter l'effet de dilution lorsque le carburant est susceptible d'avoir des effets dommageables sur la lubrification et/ou de polluer le carter à travers la segmentation du piston.

L'invention sera mieux comprise à la lecture de la description qui suit des éléments concernés par l'invention d'un moteur constituant un mode de mise en œuvre particulier de celle-ci, donné à titre d'exemple non limitatif. La description se réfère aux dessins qui l'accompagnent, dans lesquels:

— la figure 1 est une vue en coupe schématique de la partie haute d'un cylindre de moteur conforme à un mode particulier de réalisation de l'invention,

— la figure 2 est une vue de dessus suivant la ligne II–II de la figure 1,

— la figure 3 est une vue de détail à grande échelle montrant la constitution de la partie périphérique haute du piston,

— la figure 4 est un schéma montrant une cinématique possible de commande de la crémaillère de la pompe d'injection, à partir du volet d'air du moteur,

— la figure 5 est un diagramme de distribution,

– la figure 6 est un schéma montrant la répartition des trous d'un injecteur utilisable dans le mode de réalisation de la figure 1,

– la figure 7 est une vue schématique en coupe montrant un dispositif de changement rapide d'avance à l'injection,

– la figure 8 est un schéma de principe d'un dispositif de départ et de marche à froid du moteur.

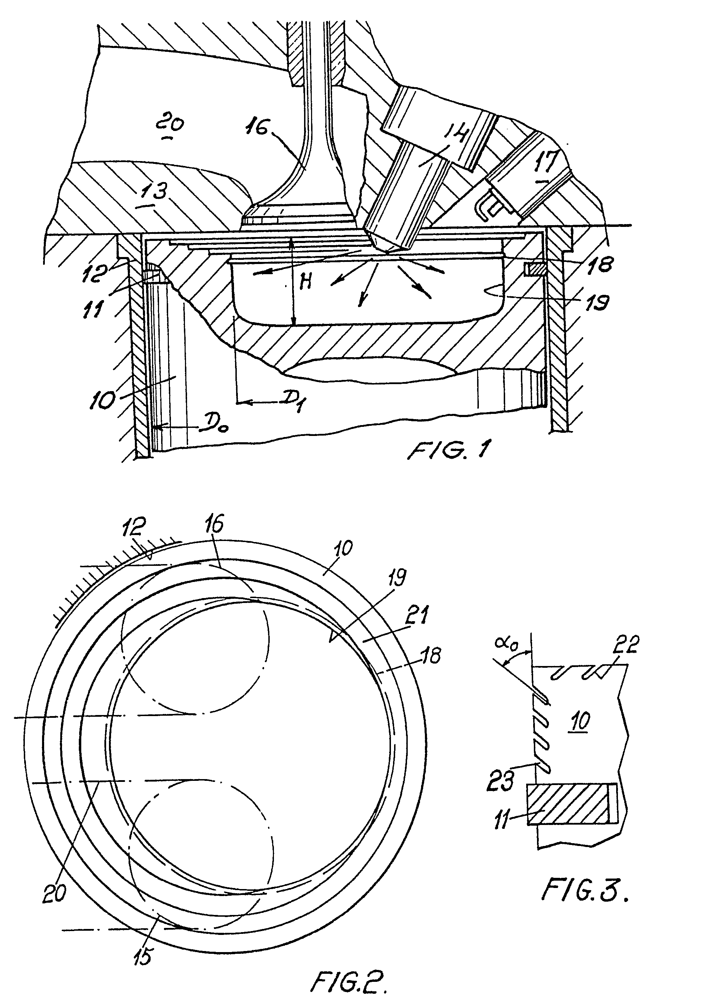

On décrira d'abord, en faisant référence aux figures 1 et 2, une constitution possible de chambre de combustion à haute turbulence pour un moteur destiné à utiliser comme combustible des alcools, ou plus généralement des carburants ayant une chaleur de vaporisation élevée, un faible indice de cétane (ce qui interdit un auto-allumage par compression) et un indice d'octane élevé.

La chambre de combustion est limitée, de façon classique, par un piston 10 muni de segments 11 et animé d'un mouvement de va-et-vient dans un cylindre 12 et par une culasse 13 qui porte un injecteur 14, au moins une paire de soupapes 15 et 16 et une bougie d'allumage 17.

Dans la calotte du piston est ménagée une cuvette 19 sensiblement de révolution. Cette cuvette 19 est excentrée et, dans le mode de réalisation illustré, cylindrique à fond sensiblement plat. Le rapport des diamètres de la cuvette et du piston est compris entre 0,60 et 0,75, du moins pour des moteurs de moyenne cylindrée (0,7 à 1 l environ). Le rapport entre la profondeur maximum de la cuvette et le diamètre du piston sera habituellement compris entre 0,15 et 0,20. Cette cuvette constitue la chambre de combustion lorsque le piston est au voisinage de son point mort haut et que se produit l'allumage. Il faut relever au passage que l'avance à l'allumage peut être faible, typiquement de 10° au ralenti avec un déploiement supplémentaire d'avance maximal du même ordre pour des moteurs agricoles ou industriels dont la vitesse est limitée à 3000 t/mn environ. La combustion est rapide et il est donc inutile d'utiliser les fortes avances nécessaires dans des moteurs à essence pour compenser la faible vitesse de propagation de la combustion en cas d'emploi de mélange pauvre. En effet, la vitesse de combustion de l'alcool en mélange pauvre ne diminue pas notablement comme c'est le cas avec l'essence. Un avantage essentiel de cette faible avance est, évidemment, une réduction importante des pertes de chaleur et l'obtention d'un rapport de détente presque égal au rapport de compression.

Le piston 10 qui vient d'être décrit coopère avec une culasse de forme plate, dans laquelle la bougie 17 est placée de façon que l'étincelle se produise approximativement face à la zone périphérique de la cavité 19, là où se produit par stratification un mélange riche, comme on le verra plus loin.

La soupape d'échappement 15, et surtout la soupape d'admission 16, ainsi que les tubulures 20 qu'elles ferment, sont disposées et orientées de façon que l'air admis dans la chambre prenne un mouvement de rotation rapide qui, en fin de compression, peut atteindre plusieurs centaines de tours par seconde dans la cuvette 19, de diamètre faible par rapport à l'alésage du cylindre. Ce mouvement se traduit par une forte turbulence qui se concentre dans la cuvette et par une stratification énergique conduisant à l'obtention d'un mélange riche en carburant au droit des électrodes de la bougie 17.

Dans le cas illustré en figures 1 et 2, les soupapes 15 et 16 sont à levée parallèle à l'axe de la chambre de combustion et elles sont situées chacune d'un côté du plan diamétral occupé par l'injecteur 14 et la bougie 17. La soupape d'admission 16 s'ouvre en face d'une rampe 21 à faible pente (5° par exemple) entourant la cavité 19 sur une fraction de son développement circonférentiel. L'arête extérieure de cette rampe est avantageusement parallèle à l'arête du piston, de sorte que la rampe 21 présente une largeur variable lorsque la cuvette 19 est excentrée, comme le montre la figure 2. Cette rampe 21 accroît encore la richesse du mélange qui se présente au droit de la bougie et augmente l'efficacité de la stratification et la turbulence. Son développement angulaire dépend naturellement de la position des soupapes. Dans le mode de réalisation des figures 1 et 2, la rampe 21 est constituée par plusieurs gradins de profondeur constante usinés dans la tête du piston et ayant des centres décalés; une telle disposition a l'avantage d'être facile à usiner. Son action est complétée par une gorge semi-circulaire 18 de faible profondeur (de l'ordre du millimètre).

L'utilisation comme carburant d'alcool qui, d'une part, se condense sur la calotte du piston, autour de la cuvette 19, et sur les parois du cylindre lorsque le moteur est froid et, d'autre part, n'a aucune propriété lubrifiante, contrairement aux huiles lourdes utilisées dans les moteurs Diesel, peut provoquer une dégradation de fonctionnement. En effet, les segments 11 ne peuvent empêcher le passage de l'alcool vers le carter et un effet de dilution. Pour résoudre ce problème, on munit le piston de rainures circonférentielles inclinées. Dans le cas montré en figure 3, le piston porte un premier jeu de rainures 22 sur sa face supérieure, autour de la cuvette, et un second jeu de rainures 23 sur sa face latérale, entre l'arête supérieure et le segment de tête 11. Les rainures 22 ont pour but de recueillir les gouttelettes jusqu'à vaporisation et de les empêcher de s'écouler vers la paroi du cylindre. Les rainures 23, de leur côté, qui peuvent être seules prévues, collectent l'alcool qui s'infiltre entre piston et alésage et déposent cet alcool sur l'alésage lorsque le piston redescend de façon à provoquer sa vaporisation. Les fentes doivent présenter un angle aigu $\alpha_0$ avec la surface dans laquelle elles sont découpées. Cet angle est avantageusement de l'ordre de 45°. Il suffit que les fentes aient une largeur et une profondeur faibles, typiquement de l'ordre de 0,5 mm.

Du fait de la stratification énergique réalisée dans la chambre de combustion, le moteur est beaucoup moins sensible au dosage de l'air qu'un moteur à allumage commandé classique. Il reste toutefois nécessaire d'étrangler l'aspiration d'air pour le démarrage et préférable de le faire lors du fonctionnement à froid sous faible charge. Dans la pratique, on peut prévoir un volet d'air qui sera fermé pour le démarrage à froid (un excès de richesse étant sans inconvénient dans le cas d'un moteur à alcool qui peut fonctionner en surstœchiométrique jusqu'à des richesses allant jusqu'à 1,35 environ). Le volet d'air peut ensuite être progressivement ouvert, en fonction de la position de la crémaillère de la pompe d'injection, jusqu'au tiers de la charge environ, puis fonctionner à pleine ouverture du volet au-delà. Il faut remarquer au passage que l'on aura rarement intérêt à munir le moteur suivant l'invention d'un dispositif de forte suralimentation, qui ferait réapparaître des difficultés de démarrage à froid par suite de l'abaissement nécessaire du taux de compression.

Une autre solution, illustrée en figure 4, comporte un dispositif pneumatique de dosage de la quantité de carburant injectée par cycle qui est commandé en fonction de la charge, fixée par un organe d'étranglement actionné par un opérateur.

L'organe d'étranglement représenté est constitué par un papillon 24 muni d'une tringlerie de commande 25. Une prise de pression 26 située en aval du papillon est reliée, par l'intermédiaire d'une électrovanne 27 de départ à froid, dont le rôle apparaîtra plus loin, à un moteur pneumatique 28 dont l'équipage mobile, constitué par une membrane, est soumis aux actions antagonistes de la dépression et d'un ressort taré 30. Cet équipage mobile est attelé à la crémaillère 29 de la pompe haute pression alimentant les injecteurs et fixe sa position. Sur la figure 4, l'électrovanne est alimentée par un circuit comprenant un interrupteur 33 fermé en vue du départ à froid.

Les variations de position du papillon 24 se traduisent par une variation de la pression absolue de l'air aspiré par le moteur lorsque ce dernier fonctionne. La plage de variation de la pression absolue s'étend entre la pression atmosphérique (cas de la marche à pleine charge) et une valeur minimale (correspondant au ralenti, si on écarte le cas du fonctionnement en moteur frein). Le moteur pneumatique 28 peut être prévu pour assurer une variation linéaire de la quantité de combustible délivrée par cycle entre ces deux points de fonctionnement, où le dosage est prévu suivant les critères habituels pour les moteurs à combustion interne à allumage par étincelle, c'est-à-dire pour assurer la stœchiométrie du mélange.

Cette disposition permet d'assurer aisément l'enrichissement nécessaire pour le départ à froid. Il suffit d'interrompre la transmission de la dépression entre la prise de pression 26 et le moteur 28 en excitant l'électrovanne 27. Dans ce cas, la pression atmosphérique s'établit dans le moteur 28, qui peut être muni à cet effet d'un étranglement calibré de mise à l'atmosphère. La pompe haute pression fonctionne alors à plein débit.

Le diamètre du conduit d'admission est choisi en fonction du taux de remplissage souhaité pour les chambres de combustion du moteur et de la pression absolue qui règne en aval du papillon 24 lors du fonctionnement à plein régime et à plein couple. Un conduit 31 de recyclage (blow-by) avantageusement muni d'un puits déshuileur débouche en amont du papillon dans le conduit d'admission pour recycler en phase vapeur le carburant qui est passé des chambres de combustion dans le carter. Ce dégazage est rendu d'autant plus facile que ce carburant se dégage dès montée en température du moteur, ce qui limite considérablement les effets de dilution. Le conduit de recyclage 31 peut être muni d'une vanne 32 coupée au papillon 24 de façon que les sections de passage offertes par la vanne 32 et le papillon 24 soient sensiblement proportionnelles.

On voit que le moteur suivant l'invention peut être réalisé en utilisant la plupart des composants d'un moteur Diesel classique, donc avec de faibles investissements. Il suffit de remplacer le piston pour réduire le rapport volumétrique, typiquement à une valeur comprise entre 12 et 14 et de prévoir l'emplacement d'une bougie d'allumage. L'injecteur peut avoir la même position que sur le moteur Diesel d'origine, la position de la cuvette 19 dans le piston étant déterminée en conséquence. Mais on utilisera avantageusement, au lieu d'un injecteur monotrou ou d'un injecteur fournissant une nappe plate de combustible, un injecteur à grand nombre de trous, dont la disposition dépendra du diagramme de distribution, comme on le verra plus loin.

Le dispositif de commande d'injection doit être réglé pour que l'avance à l'injection soit beaucoup plus importante que sur moteur Diesel et que le combustible soit dispersé et ait été vaporisé et réchauffé par la phase de compression lorsque jaillit l'étincelle d'allumage.

La figure 5 montre en 34 une zone typique de variation de l'avance à l'allumage sur le moteur. Le cercle intérieur fait apparaître en 35 et 36, respectivement, l'avance à l'ouverture et le retard à la fermeture d'échappement. Le cercle extérieur fait apparaître, en 37 et 38, l'avance à l'ouverture et le retard à la fermeture de l'admission. On constate qu'a été conservé le croisement de soupapes qui est classique sur les moteurs Diesel à allumage par compression. Ce croisement peut toutefois être réduit car la rétention de gaz brûlés n'est pas gênante dans le cas où le carburant est à base d'alcool et elle est même favorable à un bon démarrage à froid.

Suivant un aspect de l'invention, l'injection s'effectue sur un angle $\alpha_1$ important, dépassant typiquement 60°, ce qui permet d'utiliser une came de commande à profil beaucoup plus doux (c'est-à-dire un angle d'attaque de came beaucoup plus faible) que sur les moteurs Diesel courants où l'angle d'injection ne dépasse guère 40°. Dans la pratique, un angle d'injection de 60° environ sera utilisé dans le cas d'un moteur industriel lent, un angle de 90° environ pour un moteur automobile rapide.

Lorsque le moteur fonctionne à sa température normale, il sera souhaitable de commencer l'injection immédiatement après la fermeture de l'échappement, comme indiqué en 39 sur la figure 5. L'augmentation du temps d'injection augmente corrélativement le temps pendant lequel il y a vaporisation du combustible, ce qui se traduit pas une température d'échappement plus basse, une augmentation de puissance et une augmentation du rendement thermique. Il faut d'ailleurs remarquer que cela se traduit par une modification du cycle, où la compression n'est plus adiabatique.

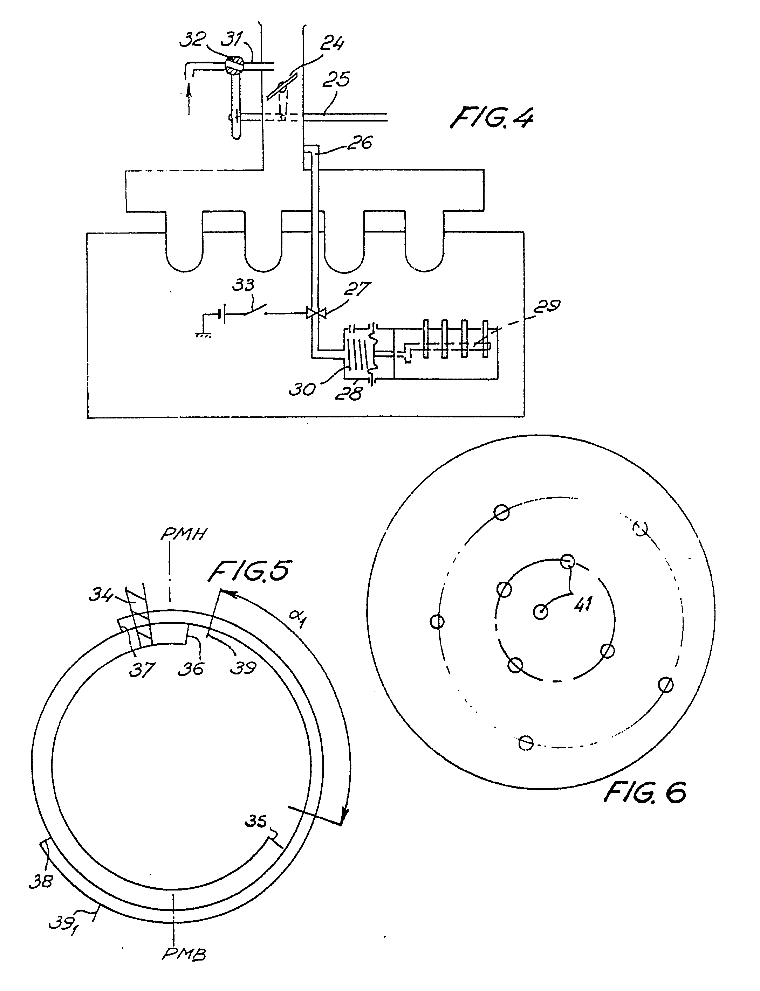

Pour que l'injection s'effectue, au moins dans sa phase initiale, dans la cuvette du moteur qui constituera finalement chambre de combustion, avec une répartition homogène, il est souhaitable d'adopter un injecteur à nombre de trous élevé. Sur la figure 6, l'injecteur comporte dix trous tels que 41 répartis en trois rangées (centre, cône à 75° et cône à 120°) et la figure 1 montre que, au début de l'injection, le combustible est entièrement projeté dans la cuvette 19.

Si l'adoption d'une injection commençant peu après la fermeture de la soupape d'échappement est très favorable en marche normale, elle n'est pas acceptable pour les démarrages à froid: du fait de la faible vitesse de rotation du moteur et de la basse température des parois, le combustible ne reste pas sous forme de brouillard et ne se vaporise pas, mais tend à se déposer.

En conséquence, on adoptera, pour le démarrage du moteur, une avance à l'injection beaucoup plus faible, ne dépassant pas 180° par rapport au point mort haut. On a indiqué en $39_1$, sur la figure 5, une avance représentative de celles utilisables, l'angle $\alpha_1$ d'injection restant inchangé, ce qui permet de conserver la même came.

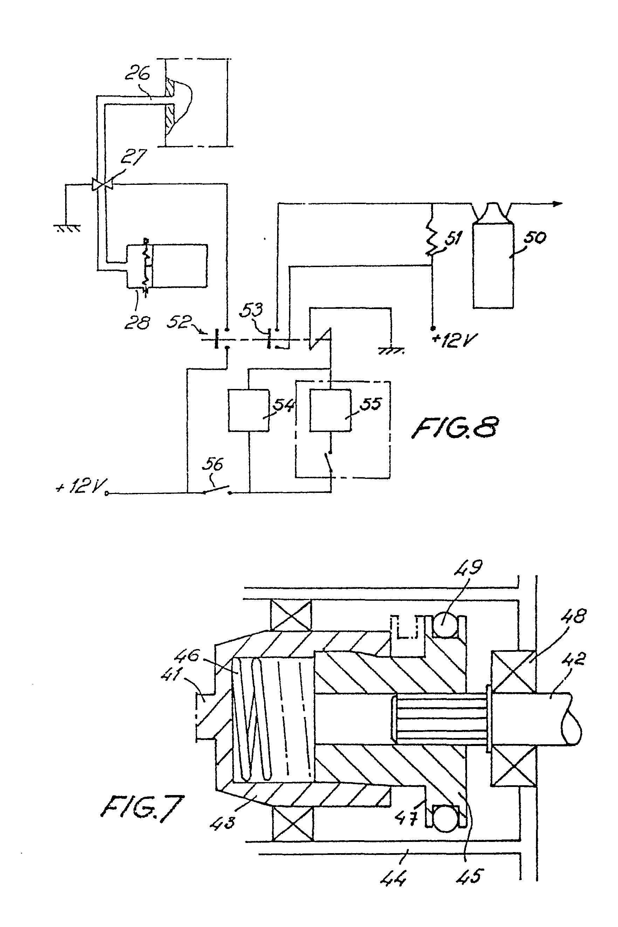

La modification de l'avance à l'injection peut être obtenue de façon simple en interposant un accouplement à variation rapide d'angle, par exemple du genre montré en figure 7, entre l'arbre de distribution 41 entraîné par le moteur et l'arbre 42 de la pompe haute pression d'injection. Cet accouplement comprend une douille 43 solidaire de l'arbre et montée dans un boîtier 44 par l'intermédiaire d'un roulement à bille et un balladeur 45 claveté coulissant sur la partie terminale de l'arbre 42. Le baladeur 45 et la douille 43 sont couplés par une liaison hélicoïdale imposant au pignon un déplacement angulaire relatif de 100° environ par rapport à la douille lorsque ce pignon passe d'une position arrière, vers laquelle il est repoussé par un ressort 46, à une position avant, indiquée en traits mixtes. Les positions terminales sont fixées par appui des flancs d'un renflement 47 du baladeur sur des parois de butée prévues sur la douille et sur un roulement 48 supportant l'arbre 42. Le baladeur 45 est muni d'une fourchette 49 permettant de l'amener en position avant lors du démarrage.

Cette disposition permet, au cours du lancement du moteur et pendant la période initiale de fonctionnement à froid, de réduire l'avance à l'injection afin que le combustible soit encore à l'état de brouillard lorsque jaillit l'étincelle.

Etant donné que le rapport volumétrique d'un moteur suivant l'invention est nettement plus élevé que celui d'un moteur à cycle de Beau de Rochas fonctionnant à l'essence, l'étincelle fournie par un dispositif d'allumage classique à bobine peut être insuffisante pour provoquer la combustion lors du démarrage à froid. Cette difficulté peut être écartée en accroissant la tension sous laquelle s'effectue la décharge pendant le lancement du moteur et pendant une période initiale de fonctionnement à froid, qui peut être fixée par des moyens de temporisation, par exemple à 50 secondes environ.

La figure 8 montre schématiquement un circuit de démarrage à froid remplissant cette fonction. Une résistance d'atténuation 51 est montée en série entre l'alimentation en courant continu et le primaire de la bobine d'allumage 50 dont le secondaire alimente le rupteur. Un relais 52 permet de court-circuiter la résistance 51 lors du lancement du moteur et pendant une phase initiale de fonctionnement à froid. Pour cela, le relais comprend un premier contact mobile 53 qui, lorsque l'enroulement du relais est excité, court-circuite la résistance 51.

Le circuit d'alimentation de la bobine du relais comporte, en série, un contact thermostatique 54 et une temporisation 55, pendant une durée inférieure à la minute, ainsi que l'interrupteur classique 56 d'allumage. Une seconde paire de contacts du relais peut être interposée sur l'alimentation de l'électrovanne 27, se substituant ainsi à l'interrupteur manuel 33 de la figure 4.

Le fonctionnement est en conséquence le suivant, lors du démarrage à froid. La fermeture du contact d'allumage 56 provoque la fermeture des contacts du relais 52, donc la mise en communication du moteur pneumatique 28 avec l'atmosphère et la mise en court-circuit de la résistance 51. La commande du démarreur peut être couplée à celle du baladeur 45 pour limiter l'avance à l'injection à une valeur inférieure à 180°. Lorsque le moteur a démarré et tourne au ralenti, l'avance à l'injection reprend la valeur normale. Au bout de la durée de temporisation fixée par le circuit 55, alors que le moteur s'est déjà échauffé, l'électrovanne 27 s'ouvre, réduisant la quantité de combustible injectée par cycle à une valeur proportionnelle au degré d'ouverture du papillon et l'allumage s'effectue sous tension normale.

Le capteur de température 54 sera généralement soumis à la température de l'eau de refroidissement du moteur ou à la température du bloc culasse.

Le circuit de la figure 8 peut évidemment être complété pour provoquer, au lieu d'une variation par tout ou rien, une variation progressive et/ou une modification de la durée de temporisation fonction de la température initiale du moteur, mesurée par le capteur 54.

Au lieu d'utiliser un allumage classique à bobine, on peut évidemment utiliser également un allumage de type électronique, voire même une magnéto du genre utilisé sur les moteurs à gaz ou les moteurs de bateaux de pêche.

On voit que l'invention permet de réaliser un moteur propre à brûler des carburants de composition variable, à base de produits non pétroliers, sans pour autant exiger des moyens d'apport de chaleur externe et avec un rendement thermique global élevé. L'emploi d'une faible avance à l'allumage réduit en effet les pertes de chaleur et permet de se rapprocher du cycle théorique à volume constant et de conserver une température d'échappement normale, même à PME élevé. En adoptant une distribution et un calage d'injection fixes, combinés à un allumage par magnéto qui écarte la nécessité d'une batterie d'accumulateurs, il est possible de réaliser des moteurs rustiques utilisables dans des pays manquant de produits pétroliers et disposant par contre de carburants à base d'alcools obtenus par fermentation de produits appartenant à la biomasse.

**Revendications**

1. Moteur à combustion interne à injection directe et à allumage commandé, ayant préférablement une valeur du taux de compression comprise entre 12 et 14 et destiné à utiliser un carburant à chaleur de vaporisation élevée, supérieure à 628 kJ/kg (150 cal/g), comprenant au moins un cylindre fermé par une culasse munie d'une bougie d'allumage (17) et un piston (10) animé d'un mouvement alternatif dans le cylindre et délimitant avec la culasse une chambre de combustion, des moyens portés par la culasse pour injecter dans la chambre, à chaque cycle du moteur, une quantité dosée de carburant, une cuvette (19) sensiblement de révolution étant ménagée dans la calotte du piston pour recevoir le carburant, caractérisé en ce que

la bougie (17) est placée à proximité de la périphérie de la cuvette,

la cuvette (19) est excentrée et est entourée, sur une fraction de sa périphérie, par une rampe (21) ménagée dans le piston, dont la profondeur varie dans le sens circonférentiel à la cuvette,

en ce que les moyens d'admission d'air comportent une soupape placée dans la culasse (13) et une tubulure débouchant par rapport à la cuvette dans une position telle que l'air aspiré prenne un mouvement tourbillonnaire dans la cuvette (19) et la rampe,

et en ce que le carburant est injecté avec une avance d'au moins 140°, le début de l'injection intervenant, lorsque le moteur est à sa température normale de fonctionnement, peu après la fermeture de l'échappement.

2. Moteur suivant la revendication 1, caractérisé en ce que le rapport entre le diamètre de la cuvette et celui du piston est compris entre 0,60 et 0,75, tandis que le rapport entre la profondeur maximum de la cuvette et le diamètre du piston est compris entre 0,15 et 0,20.

3. Moteur suivant la revendication 1 ou 2, caractérisé en ce que les moyens d'injection sont prévus de façon à fournir un jet de carburant dans la cuvette lorsque le piston est dans la position correspondant au début de l'injection en fonctionnement normal du moteur.

4. Moteur suivant l'une quelconque des revendications précédentes, caractérisé en ce que la çalotte et/ou la paroi latérale du piston porte, à proximité de la périphérie du piston, des rainures coaxiales (22, 23) inclinées de collection des gouttelettes de carburant non vaporisé.

5. Moteur suivant l'une quelconque des revendications précédentes, caractérisé en ce que les moyens d'injections sont commandés par un système fournissant une injection sur un angle compris entre 60 et 90°, le début de l'injection intervenant dès fermeture de l'échappement, lorsque le moteur est à sa température normale de fonctionnement.

6. Moteur suivant la revendication 5, caractérisé en ce que ledit système comporte un accouplement à commande rapide permettant de modifier l'avance d'un angle de l'ordre de 180°.

7. Moteur suivant l'une quelconque des revendications précédentes, caractérisé en ce qu'il comporte un volet d'air (24) couplé aux moyens d'injection de façon à étrangler le débit d'air aspiré lors du démarrage à froid et à faible charge du moteur.

8. Moteur suivant l'une quelconque des revendications précédentes, caractérisé en ce qu'il comprend des moyens d'augmentation de la quantité de carburant injectée par cycle et de la tension d'allumage en cas de lancement et la marche à froid du moteur pendant une durée déterminée.

**Claims**

1. Internal combustion engine with direct injection and controlled ignition, preferably having a compression ratio comprised between 10 and 14 and for use with a high vaporization heat fuel, higher than 628 kJ/kg (150 cal/g), comprising at least a cylinder closed by a cylinder head provided with an ignition plug (17) and a piston (10) having an alternating movement within the cylinder and defining a combustion chamber with the cylinder head, means carried by the cylinder head for injecting a metered quantity of fuel into the chamber during each cycle of the engine, a recess (19) (having a substantially rotational symmetry being formed within the cap of the piston for receiving the fuel, characterized in that

the plug (17) is located in the vicinity of the periphery of the recess,

the recess (19) is off-centered and is surrounded, over a fraction of its periphery, by a ramp (21) formed in the piston, whose depth varies in the peripheral direction of the recess,

in that the air admission means comprise a valve located within the cylinder head (13) and a passage which opens with respect to the recess at such a location that the drawn air assumes a swirling movement within the recess (19) and the ramp,

and in that the fuel is injected with an advance of at least 140°, the beginning of injection occuring, when the engine is at its normal operating temperature, a short time after closure of the exhaust.

2. Engine according to claim 1, characterized in that the ratio between the diameter of the recess and that of the piston is between 0.60 and 0.75, whereas the ratio between the maximum depth of the recess and the diameter of the piston is between 0.5 and 0.20.

3. Engine according to claim 1 or 2, characterized in that the injection means are provided so as to deliver a fuel jet in the recess when the piston is in the position corresponding to the beginning of injection under normal operating conditions of the engine.

4. Engine according to any one of the preceding claims, characterized in that the recess and/or the lateral wall of the piston is provided, in the vicinity of the periphery of the piston, with mutually coaxial sloping grooves (22, 23) for collecting fuel drops which are not vaporized.

5. Engine according to any one of the preceding claims, characterized in that the injection means are controlled by a system for causing fuel injection throughout an angle comprised between 60 and 90°, beginning of the injection occuring as soon as the exhaust is closed, when the engine is at its normal operating temperature.

6. Engine according to claim 5, characterized in that said system has a fast control coupling for modifying the advance by an angle of approximately 180°.

7. Engine according to any one of the preceding claims, characterized in that it comprises an air valve (24) coupled to the injection means so as to choke the intake air flow during cold starting with low engine load.

8. Engine according to any one of the preceding claims, characterized in that it comprises means for increasing the amount of fuel injected per operating cycle and the ignition voltage during cranking and cold running of the engine for a predetermined time period.

## Patentansprüche

1. Verbrennungskraftmaschine mit direkter Einspritzung und gesteuerter Zündung, welche ein bevorzugtes Verdichtungsverhältnis zwischen 12 und 14 aufweist und für Brennstoffe mit erhöhter Verdampfungswärme oberhalb von 628 kJ/kg (150 cal/g) geeignet ist, wenigstens einen durch einen Zylinderkopf mit einer Zündkerze (17) geschlossenen Zylinder und einen Kolben (10) aufweist, welcher im Zylinder in eine hin- und hergehende Bewegung versetzbar ist und mit dem Zylinderkopf eine Brennkammer begrenzt, wobei durch den Zylinderkopf geführte Einrichtungen zum Einspritzen einer dosierten Menge an Brennstoff bei jedem Verbrennungszyklus sowie eine umdrehungsempfindliche Mulde (19) vorgesehen sind, welche im Kopf des Kolbens zur Aufnahme des Brennstoffes ausgespart ist, dadurch gekennzeichnet, daß die Zündkerze (17) nahe am Umfang der Mulde angeordnet ist, daß die Mulde (19) exzentrisch angeordnet und teilweise an ihrem Umfang von einem im Kolben ausgesparten Treppenstück (21) umgeben ist, dessen Höhe entlang des Umfanges der Mulde verschieden ist, daß die Lufteinlaßeinrichtungen ein im Zylinderkopf (13) angeordnetes Ventil und einen Rohrstutzen aufweisen, welcher im Verhältnis zur Mulde in einer solchen Position einmündet, daß die angesaugte Luft eine Wirbelbewegung in der Mulde (19) und dem Treppenstück ausführt, und daß der Brennstoff mit einem Vorlauf von wenigstens 140° eingespritzt wird, wobei der Einspritzbeginn kurz nach dem Verschließen des Austritts eintritt, bis die Maschine ihre normale Arbeitstemperatur erreicht.

2. Verbrennungskraftmaschine nach Anspruch 1, dadurch gekennzeichnet, daß das Verhältnis der Durchmesser der Mulde und des Kolbens zwischen 0,6 und 0,75 und das Verhältnis zwischen der maximalen Höhe der Mulde und des Durchmessers des Kolbens zwischen 0,15 und 0,2 liegt.

3. Verbrennungskraftmaschine nach Anspruch 1 oder 2, dadurch gekennzeichnet, daß die Einspritzeinrichtungen derart ausgebildet sind, daß ein Brennstoffstrom in die Mulde lieferbar ist, wenn der Kolben in seiner dem Einspritzbeginn entsprechenden Stellung bei normaler Funktion der Maschine ist.

4. Verbrennungskraftmaschine nach Anspruch 1 oder einem der folgenden, dadurch gekennzeichnet, daß der Kopf und/oder die Seitenwand des Kolbens nahe am Umfang desselben koaxiale, geneigte Nuten (22, 23) zur Sammlung von nicht verdampften Brennstofftröpfchen aufweist.

5. Verbrennungskraftmaschine nach Anspruch 1 oder einem der folgenden, dadurch gekennzeichnet, daß die Einspritzeinrichtungen von einem System gesteuert sind, welches eine Einspritzung unter einem Winkel zwischen 60 und 90° liefert, wobei der Einspritzbeginn zwischen das Verschließen des Austritts tritt, bis die Maschine ihre normale Arbeitstemperatur erreicht.

6. Verbrennungskraftmaschine nach Anspruch 5, dadurch gekennzeichnet, daß das System eine schnelle Steuerungsschaltung aufweist, welche eine Veränderung des Vorlaufwinkels in der Größenordnung von 180° erlaubt.

7. Verbrennungskraftmaschine nach Anspruch 1 oder einem der folgenden, gekennzeichnet durch eine mit den Einspritzeinrichtungen gekoppelte Luftklappe (24) zur Drosselung des Durchsatzes an angesaugter Luft bei einem Kaltstart und bei geringer Belastung der Maschine.

8. Verbrennungskraftmaschine nach Anspruch 1 oder einem der folgenden, gekennzeichnet durch Einrichtungen zur Steigerung der Menge an eingespritztem Brennstoff je Zyklus und zur Steigerung der Zündspannung beim Kaltstart und Kaltlauf der Maschine während einer bestimmten Zeitdauer.

FIG. 1

FIG.2.

FIG.3.

FIG.4

FIG.5

FIG.6

FIG.8

FIG.7